# EUROPÄISCHE PATENTSCHRIFT

(11) **EP 0 774 752 B1**
(45) Veröffentlichungstag und Bekanntmachung des Hinweises auf die Patenterteilung: **19.02.2003**
(21) Anmeldenummer: 96117800.1
(22) Anmeldetag: 07.11.1996
(51) Int. Cl.: G11B 15/22, G11B 15/665

(54) **Bandlaufwerk**
Tape driving device
Dispositif d'entraînement de bande

(30) Priorität: 16.11.1995 DE 19542712
(43) Veröffentlichungstag der Anmeldung: 21.05.1997
(73) Patentinhaber: DEUTSCHE THOMSON-BRANDT GMBH, 78048 Villingen-Schwenningen (DE)
(72) Erfinder: Weisser, Fritz, 78112 St. Georgen (DE)

(56) Entgegenhaltungen:
- EP-A- 0 497 271
- WO-A-91/15014
- US-A- 4 635 146
- US-A- 4 685 008
- US-A- 5 299 076

## Beschreibung

Die Erfindung betrifft ein Bandlaufwerk nach dem Oberbegriff des Anspruchs 1.

Bandlaufwerke werden in Audiorecordern, Videorecordern oder Datenstreamern eingesetzt. Es gibt Bandlaufwerke mit separaten Motoren für die Wickelteller und solche mit einem gemeinsamen Antrieb. Bei Bandlaufwerken mit einem gemeinsamen Antrieb, wie sie z. B. in Videorecordern eingesetzt werden, ist ein mit einem Antriebsrad in Eingriff stehendes Zwischenrad auf einem schwenkbaren Zwischenhebel gelagert. Durch Schwenken des Zwischenhebels kann das Zwischenrad wahlweise mit einem Versorgungswickelteller oder einem Aufnahmewickelteller in Eingriff oder in eine Außereingriffstellung gebracht werden. Das Zwischenrad, das Antriebsrad und die Wickelteller besitzen Zahnkränze, die bei Eingriff ineinander kämmen.

Zum Abbremsen der Wickelteller beim Umschalten vom Wickelbetrieb in den Stopzustand dient eine Bremsvorrichtung aus schwenkbaren Bremshebeln mit Bremsklötzen, die sich an Mantelflächen der Wickelteller anlegen. Die Bremshebel werden durch einen mit ihnen gekoppelten Bremsspannhebel betätigt.

Bei bekannten Bandlaufwerken bleiben das Zwischenrad und der jeweils angetriebene Wickelteller nach Umschalten vom Wickelbetrieb in den Stopzustand entweder in Eingriff oder das Zwischenrad wird durch Schwenken des Zwischenhebels über eine Betätigung des Bremsspannhebels in eine Außereingriffstellung gebracht. Bei der ersten Alternative müssen dann außer den Wickeltellern auch das Zwischenrad und das Antriebsrad abgebremst werden. Aufgrund der Massenträgheit dieser Räder ist eine hohe Bremskraft erforderlich, wenn eine kurze Abbremszeit erzielt werden soll. Entsprechend hoch ist der Kraftaufwand zum Betätigen der Bremse, die Belastung der Bremsvorrichtung und Lager sowie der Verschleiß.

Bei der zweiten Alternative (siehe hierzu EP-A-0 497 271) müssen nach dem Überführen des Zwischenrades in die Außereingriffstellung zwar nur die Wickelteller abgebremst werden, das Schwenken des Zwischenhebels durch den Bremsspannhebels erfordert hier aber einen hohen Kraftaufwand, da beim Abbremsen der Wickelteller auf den Zwischenhebel eine einkeilende Wirkung ausgeübt wird, die dem aufzubringenden Schwenkmoment entgegengerichtet ist. Die einkeilende Wirkung kommt dadurch zustande, daß beim Betätigen des Bremsspannhebels gleichzeitig die Bremshebel mit den Bremsklötzen an die Mantelflächen der Wickelteller angelegt und diese gebremst werden, während das Zwischenrad mit dem Antriebrad aufgrund der Massenträgheit die bisherige Drehzahl aufrechterhalten möchte. Das Zwischenrad stützt sich mit seinem Zahnkranz dabei am Wickelteller ab und leitet über seine Achse ein Schwenkmoment in den Zwischenhebel ein, das auf den Wickelteller gerichtet ist, also den Eingriff des Zwischenrades mit dem Wickelteller verstärkt.

Der Erfindung liegt die Aufgabe zugrunde, ein Bandlaufwerk zu schaffen, das beim Umschalten vom Wickelbetrieb in den Stopzustand eine kurze Abbremszeit bei gleichzeitig geringerer Bremskraft und geringerem Verschleiß ermöglicht.

Diese Aufgabe wird bei einem Bandlaufwerk nach dem Oberbegriff des Anspruchs 1 durch die im Kennzeichen angegebenen Merkmale gelöst. Weiterbildungen und vorteilhafte Ausgestaltungen ergeben sich aus den Unteransprüchen.

Bei der erfindungsgemäßen Lösung wird ein Zahnhebel durch den Bremsspannhebel betätigt, der in den Zahnkranz des Zwischenrades eingreift. Der Eingriffspunkt bildet einen Drehpunkt für das Zwischenrad, über den sich der Zahnkranz abwälzt. Dabei wird über das Lager des Zwischenrades ein Schwenkmoment in den Zwischenhebel eingeleitet, das vom Wickelteller weg gerichtet ist und dadurch das Zwischenrad vom Wickelteller entkoppelt und in die Außereingriffstellung bringt. Die hierbei auf den Zahnhebel ausgeübten Kräfte sind quer zu dessen Betätigungsrichtung gerichtet und beeinflussen daher nicht die Betätigungskräfte. Nachdem der Zwischenhebel ausgeschwenkt ist gelangt auch das Zwischenrad außer Eingriff vom Zahnhebel, so daß es mit dem Antriebsrad frei auslaufen kann, also nicht etwa durch den Zahnhebel abrupt zum Stillstand gebracht wird. Die Bremsen wirken nun ausschließlich auf die Wickelteller.

Eine Weiterbildung sieht vor, daß die Zahnhebel als Verlängerung der jeweiligen Bremshebel ausgebildet sind. Diese Ausführung hat nicht nur den Vorteil eines geringen mechanischen Aufwandes, sondern ermöglicht es außerdem, die durch das Zwischenrad auf den Zahnhebel ausgeübten Querkräfte zur Erhöhung der Anlagekraft des Bremsklotzes an die Mantelfläche des zuvor angetriebenen Wickeltellers auszunutzen. Die Bremskraft wird dadurch kurzzeitig verstärkt und die Abbremszeit weiter reduziert.

Vorzugsweise weist das Zwischenrad eine Mantelfläche auf und die Zahnhebel tragen Nasen, von denen eine nach dem Abwälzen des Zahnkranzes des Zwischenrades eine Position einnimmt, welche eine Rückkehr des Zwischenrades in die Eingriffstellung mit dem zuvor in Eingriff befindlichen Versorgungswickelteller oder Aufnahmewickelteller durch Anlage an die Mantelfläche des Zwischenrades blockiert.

Das Zwischenrad kann dann bei eventuellen Pendelbewegungen des Zwischenhebels weder mit dem Zahnhebel noch mit dem Wickelteller in Eingriff kommen, solange sich das Laufwerk im Stopzustand befindet. Eine Beschädigungsgefahr der Zahnkränze wird so ausgeschlossen.

Nachfolgend wird ein Bandlaufwerk mit den erfindungsgemäßen Merkmalen anhand der Zeichnung erläutert.

In dieser zeigen:
- Fig. 1: ein Bandlaufwerk im Wickelbetrieb,
- Fig. 2: das Bandlaufwerk unmittelbar nach dem Umschalten vom Wickelbetrieb in den Stopzustand und
- Fig. 3: das Bandlaufwerk im Stopzustand.

Das in der Zeichnung dargestellte Bandlaufwerk umfaßt einen Versorgungswickelteller 1, einen Aufnahmewickelteller 2, einen Wickelantrieb mit einem Antriebsrad 3 und einem mit dem Antriebsrad 3 auf einem schwenkbaren Zwischenhebel 4 gelagerten und in Eingriff stehenden Zwischenrad 5 sowie eine Bremsvorrichtung aus schwenkbaren Bremshebeln 6, 7 mit Bremsklötzen 9, 10 zum Abbremsen des Versorgungswickeltellers 1 und des Aufnahmewickeltellers 2 und einen mit den Bremshebeln 6, 7 gekoppelten Bremsspannhebel 8. Der Versorgungswickelteller 1, der Aufnahmewickelteller 2, das Zwischenrad 5 und das Antriebsrad 3 tragen Zahnkränze 19, 20, 21, 22. Das Zwischenrad 5 ist durch Schwenken des Zwischenhebels 4 um die Achse 15 des Antriebsrades 3 wahlweise mit dem Versorgungswickelteller 1 oder dem Aufnahmewickelteller 2 in Eingriff oder in eine Außereingriffstellung bringbar. Mit dem Bremsspannhebel 8 ist jeweils ein Zahnhebel 11, 12 gekoppelt, der im Ausführungsbeispiel als Verlängerung des jeweiligen Bremshebels 6, 7 ausgebildet ist. Ferner tragen die Zahnhebel 11, 12 bzw. die Verlängerungen der Bremshebel 6, 7 Nasen 13, 14 und das Zwischenrad 5 weist eine Mantelfläche 17 auf, die sich bei bestimmten Betriebszuständen an eine der Nasen 13, 14 anlegt, so daß ein Zurückschwenken des Zwischenhebels 4 blockiert wird.

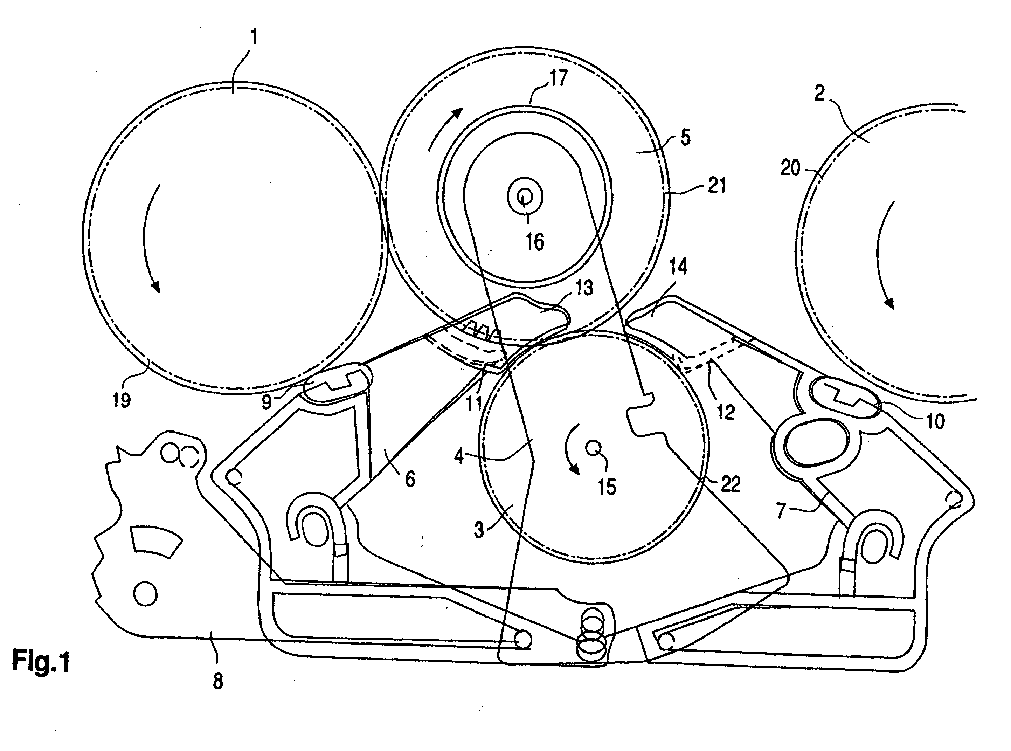

Fig. 1 zeigt sind das Bandlaufwerk im Wickelbetrieb und zwar beim Rückspulen. Die Drehrichtung ist durch Pfeile angedeutet. Der Bremsspannhebel 8 und die Bremshebel 6, 7 sind ausgeschwenkt. Der Zwischenhebel 4 ist mit dem Zwischenrad 5 zum Versorgungswickelteller 1 hin geschwenkt und das Zwischenrad 5 befindet sich über seinen Zahnkranz 21 mit dem Zahnkranz 19 des Versorgungswickeltellers 1 in Eingriff. Diese Lage des Zwischenhebels 4 wird automatisch dadurch bewirkt, daß der Antrieb mit dem Antriebsrad 3 anläuft und die Massenträgheitskraft des zu beschleunigenden Zwischenrades 5 eine Gegenkraft auf seine Antriebsachse 16 ausübt, die ein entsprechendes Schwenkmoment in den Zwischenhebel 4 einleitet. Massenträgheitskräfte und Bandtransportkräfte des angetriebenen Versorgungswickeltellers 1 bewirken, daß sich das Zwischenrad 5 mit seinem Zahnkranz 21 am Zahnkranz 19 des Versorgungswickeltellers 1 abstützt und dabei über seine Achse 16 ein Schwenkmoment in den Zwischenhebel 4 einleitet, das auf den Versorgungswickelteller 1 gerichtet ist, also den Eingriff des Zwischenrades 5 mit dem Versorgungswickelteller 1 verstärkt.

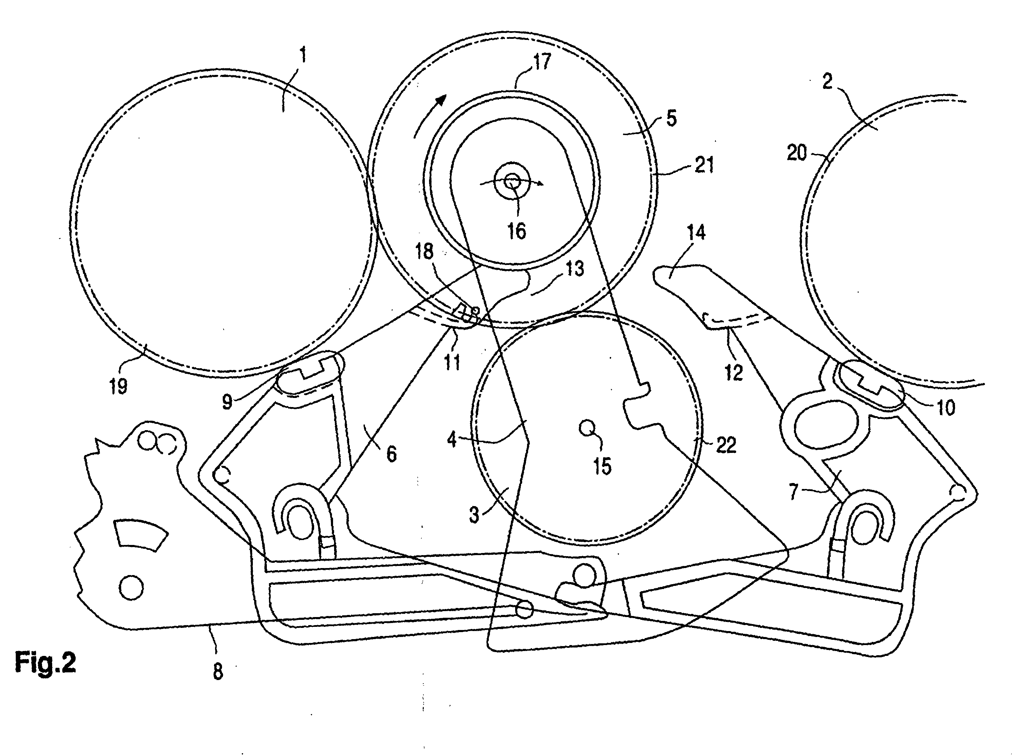

Fig. 2 zeigt das Bandlaufwerk unmittelbar nach dem Umschalten vom Wickelbetrieb in den Stopzustand. Der Bremsspannhebel 8 und die Bremshebel 6, 7 sind eingeschwenkt. Der rechte Bremsklotz 10 liegt voll an der Mantelfläche des Aufnahmewickeltellers 2 an während der linke Bremsklotz 9 teilweise an der Mantelfläche des Versorgungswickeltellers 1 anliegt. Gleichzeitig greift der linke Zahnhebel 11 in den Zahnkranz 21 des Zwischenrades 5 ein. Durch Weiterdrehen des Zwischenrades 5 wälzt sich dessen Zahnkranz 21 am Zahnhebel 11 um den Drehpunkt 18 ab. Dabei schwenkt der Zwischenhebel 4 nach rechts und das Zwischenrad 5 gelangt vom Versorgungswickelteller 1 außer Eingriff. Durch die quer auf den Zahnhebel 11 und damit auch auf den Bremshebel 6 gerichtete Reaktionskraft wird der linke Bremsklotz 9 nun stärker an die Mantelfläche des Versorgungswickeltellers 1 gedrückt und bremst diesen ab.

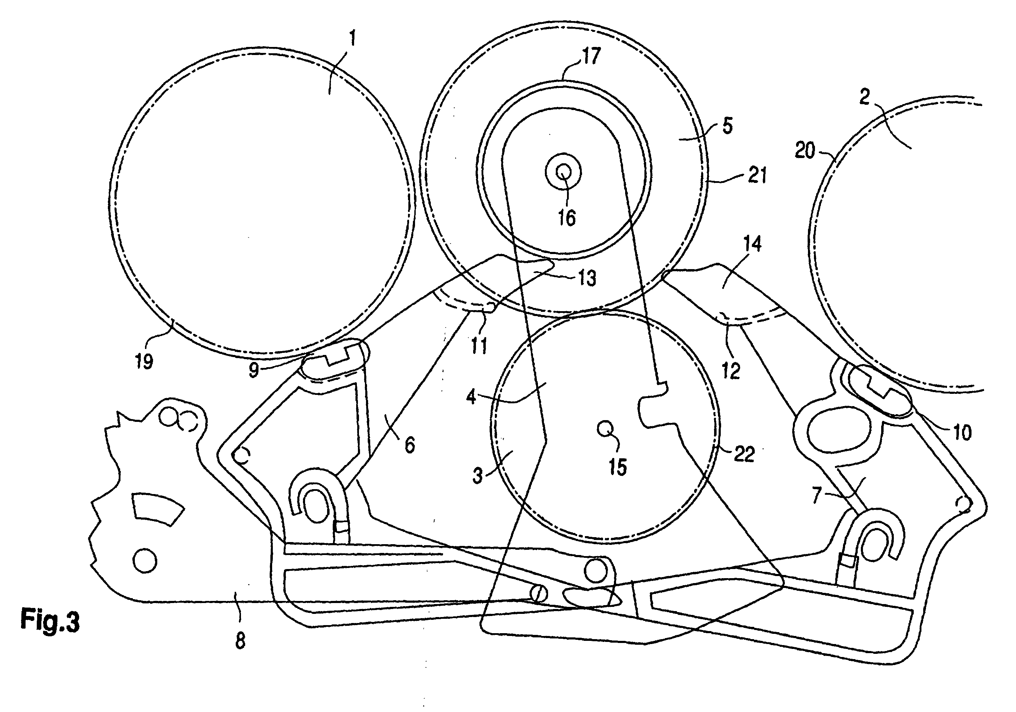

Indem anschließend der Zwischenhebel 4 weiter nach rechts schwenkt, gelangt auch der Zahnkranz 21 des Zwischenrades 5 außer Eingriff vom linken Zahnhebel 11. Der Bremshebel 6 mit dem Zahnhebel 11 und der Nase 13 kann sich nun noch etwas weiter vorschieben. Die Nase 13 gelangt schließlich auf diese Weise in eine Position, in der sie eine Rückkehr des Zwischenrades 5 in die Eingriffstellung mit dem zuvor in Eingriff befindlichen Versorgungswickelteller 1 durch Anlage an die Mantelfläche 17 des Zwischenrades 5 blockiert. Den Stopzustand, in dem sich der Zwischenhebel 4 mit dem Zwischenrad 5 in einer Außereingriffstellung befindet und die Bremsklötze 9, 10 an den Mantelflächen der Wickelteller 1, 2 voll anliegen zeigt Fig. 3.

Das Zwischenrad 5 kann erst nach Lösen der Bremse durch Ausschwenken des Bremsspannhebels 8 und der Bremshebel 6, 7 wieder mit einem der Wickelteller 1, 2 ein Eingriff gelangen. Die auf den Rückspulbetrieb bezogene Darstellung gilt für den Vorspulbetrieb analog. In diesem Fall befindet sich der Zwischenhebel 4 in der rechten Position und das Zwischenrad 5 steht mit dem Aufnahmewickelteller 2 in Eingriff. Beim Umschalten vom Wickelbetrieb in den Stopzustand gelangt dann der rechte Zahnhebel 12 mit dem Zahnkranz 21 des Zwischenrades 5 in Eingriff.

## Patentansprüche

1. Bandlaufwerk, welches einen Versorgungswickelteller (1), einen Aufnahmewickelteller (2), einen Wickelantrieb mit einem Antriebsrad (3) und einem mit dem Antriebsrad (3) auf einem schwenkbaren Zwischenhebel (4) gelagerten und in Eingriff stehenden Zwischenrad (5), das einen Zahnkranz (21) trägt und durch Schwenken des Zwischenhebels (4) wahlweise mit dem Versorgungswickelteller (1) oder dem Aufnahmewickelteller (2) in Eingriff oder in eine Außereingriffstellung bringbar ist, und welches ferner ein Bremsvorrichtung aus schwenkbaren Bremshebeln (6, 7) mit Bremsklötzen (9, 10) zum Abbremsen des Versorgungswickeltellers (1) und des Aufnahmewickeltellers (2) sowie aus einem mit den Bremshebeln (6, 7) gekoppelten Bremsspannhebel (8) umfaßt, **dadurch gekennzeichnet, daß** mit dem Bremsspannhebel (8) Zahnhebel (11, 12) gekoppelt sind, von denen einer beim Umschalten des Bandlaufwerks vom Wickelbetrieb in den Stopzustand in den Zahnkranz (21) des Zwischenrades (5) eingreift und im Eingriffspunkt einen Drehpunkt (18) für das Zwischenrad (5) bildet, über den sich der Zahnkranz (21) des Zwischenrades (5) abwälzt und vom zuvor in Eingriff stehenden Versorgungswickelteller (1) oder Aufnahmewickelteller (2) in die Außereingriffstellung gelangt.

2. Bandlaufwerk nach Anspruch 1, **dadurch gekennzeichnet, daß** die Zahnhebel (11, 12) als Verlängerung der jeweiligen Bremshebel (6, 7) ausgebildet sind.

3. Bandlaufwerk nach Anspruch 1 oder 2, **dadurch gekennzeichnet, daß** das Zwischenrad (5) eine Mantelfläche (17) aufweist und die Zahnhebel (11, 12) Nasen (13, 14) trägen, von denen eine nach dem Abwälzen des Zahnkranzes (21) des Zwischenrades (5) eine Position einnimmt, welche eine Rückkehr des Zwischenrades (5) in die Eingriffstellung mit dem zuvor in Eingriff befindlichen Versorgungswickelteller (1) oder Aufnahmewickelteller (2) durch Anlage an die Mantelfläche (17) des Zwischenrades (5) blockiert.

## Claims

1. Tape drive, comprising a supply spool (1), a take-up spool (2), a winding drive having a drive wheel (3) and an intermediate wheel (5) which is in engagement and mounted with the drive wheel (3) on a pivotable intermediate lever (4), is provided with a toothed rim (21) and, by pivoting the intermediate lever (4), can optionally be brought into engagement with the supply spool (1) or the take-up spool (2) or into a disengaged position, and further comprising a brake device comprising pivotable brake levers (6, 7) with brake shoes (9, 10) for braking the supply spool (1) and the take-up spool (2), and also a brake tensioning lever (8) coupled to the brake levers (6, 7), **characterized in that** toothed levers (11, 12) are coupled to the brake tensioning lever (8), one of which toothed levers, when the tape drive changes over from the winding mode to the stop state, engages in the toothed rim (21) of the intermediate wheel (5) and, at the point of engagement, forms a pivot (18) for the intermediate wheel (5), over which pivot the toothed rim (21) of the intermediate wheel (5) rolls and passes from the previously engaged supply spool (1) or take-up spool (2) into the disengaged position.

2. Tape drive according to Claim 1, **characterized in that** the toothed levers (11, 12) are designed as an extension of the respective brake levers (6, 7).

3. Tape drive according to Claim 1 or 2, **characterized in that** the intermediate wheel (5) has a curved surface (17) and the toothed levers (11, 12) are provided with lugs (13, 14), one of which, after the rolling of the toothed rim (21) of the intermediate wheel (5), assumes a position which blocks a return of the intermediate wheel (5) into the engaged position with the previously engaged supply spool (1) or take-out spool (2) by bearing against the curved surface (17) of the intermediate wheel (5).

## Revendications

1. Lecteur de bandes qui porte un plateau dérouleur d'alimentation (1), un plateau enrouleur de réception (2), un entraînement d'enroulement doté d'une roue d'entraînement (3) et une roue intermédiaire (5) montée sur un levier intermédiaire (4) pivotant et engagée sur la roue d'entraînement (3), la roue intermédiaire (5) portant une couronne dentée (21) et pouvant être amenée sélectivement, par pivotement du levier intermédiaire (4) à s'engager sur le plateau dérouleur d'alimentation (1) ou le plateau enrouleur de réception (2) ou dans une position désengagée par rapport à ceux-ci, et comprenant en outre un dispositif de freinage constitué de leviers de frein pivotants (6, 7) dotés de sabots de frein (9, 10) pour freiner le plateau dérouleur d'alimentation (1) et le plateau enrouleur de réception (2), ainsi que d'un levier de serrage de freins (8) accouplé aux leviers de frein (6, 7), **caractérisé en ce que** des leviers dentés (11, 12) sont accouplés au levier de serrage de freins (8), l'un des leviers dentés s'engageant lors du passage du lecteur de bandes du fonctionnement d'enroulement à la situation d'arrêt dans la couronne dentée (21) de la roue intermédiaire (5) et formant au point d'engagement un centre de rotation (18) pour la roue intermédiaire (5), par lequel la couronne dentée (21) de la roue intermédiaire (5) tourne et passe depuis la position engagée sur le plateau dérouleur d'alimentation (1) ou sur le plateau enrouleur de réception (2) jusque dans la position désengagée.

2. Lecteur de bandes selon la revendication 1, **caractérisé en ce que** les leviers dentés (11, 12) sont configurés comme prolongement du levier de frein (6,7) respectif.

3. Lecteur de bandes selon la revendication 1 ou 2, **caractérisé en ce que** la roue intermédiaire (5) présente une surface d'enveloppe (17) et les leviers dentés (11, 12) portent des becs (13, 14) dont l'un, après la rotation de la couronne dentée (21) de la roue intermédiaire (5), prend une position qui bloque un retour de la roue intermédiaire (5) dans la position d'engagement avec le plateau dérouleur d'alimentation (1) ou le plateau enrouleur de réception (2) avec lequel elle se trouvait précédemment engagée, par application sur la surface d'enveloppe (17) de la roue intermédiaire (5).
